# EUROPEAN PATENT APPLICATION

(11) **EP 4 806 545 A1**
(43) Date of publication of application: **16.09.2026**
(21) Application number: 26164541.0
(22) Date of filing: 13.03.2026
(51) Int. Cl.: B01D 71/02, G01N 27/333, G01N 27/416

(54) **SELECTIVE ELECTRODE MEMBRANE WITH SILICA**

(30) Priority: 13.03.2025 US 202563771477 P; 10.03.2026 US 202619562533
(71) Applicant: Analog Devices International Unlimited Company, Limerick, V94 RT99 (IE)
(72) Inventor: ARULMOZHI, Nakkiran, Limerick, V94 RT99 (IE)
(74) Representative: Elkington and Fife LLP

(57) **Abstract**

Described herein is a selective electrode membrane having an epoxy resin component, a hardener component, one or more polyurethanes, and a silica. The disclosure is also directed to a selective electrode having a substrate with a selective electrode membrane on a surface thereof, and methods of making the same.

## Description

### CROSS-REFERENCE TO RELATED APPLICATION

This application claims priority to U.S. Provisional Application No. 63/771,477, filed on March 13, 2025, the disclosure of which is hereby incorporated by reference in its entirety.

### TECHNICAL FIELD

This disclosure relates generally to the field of selective electrode membranes, selective electrodes incorporating the same, and methods of making the same.

### BACKGROUND

Selective electrodes serve an important role in various diagnostic assays for detecting and/or quantifying certain ions and/or molecules in a sample. However, the use of selective electrodes in this context is complicated by the impact of interferents (i.e., components in a sample that may provide a positive or negative bias for the ion or molecule of interest). There is thus a need in the art for selective electrodes that can withstand common interfering ions.

### SUMMARY

Disclosed herein is a selective electrode membrane having at least one matrix material and a silica. The disclosure is also directed to a selective electrode having a substrate with a selective electrode membrane on a surface thereof. Further disclosed are methods of making the selective electrode membranes and selective electrodes as described herein.

### BRIEF DESCRIPTION OF THE DRAWINGS

FIG. 1A is a cross-sectional view of a first example selective electrode according to aspects of the present disclosure.
FIG. 1B is a cross-sectional view of a second example selective electrode according to aspects of the present disclosure.
FIG. 1C is a cross-sectional view of a third example selective electrode according to aspects of the present disclosure.
FIG. 2A is a cross-sectional view of an example potentiometric cell assembly according to aspects of the present disclosure.
FIG. 2B is a top view of potentiometric cell assembly as described in relation to FIG. 2A.
FIG. 3 is a graph of the error (in mM) in chloride ion measurement with respect to each of a plurality of interference substances for each of a plurality of membranes as described in Example II.
FIG. 4 shows an example of a sensing assembly according to aspects of the present disclosure.
FIG. 5A shows the interference-resistant properties of the electrodes described in Example IV on day one.
FIG. 5B shows the interference-resistant properties of the electrodes described in Example IV on day one.
FIG. 5C shows the interference-resistant properties of the electrodes described in Example IV on day three.
FIG. 5D shows the interference-resistant properties of the electrodes described in Example IV on day three.
FIG. 6 shows the sensitivity results discussed in Example IV.
FIG. 7 shows the interference-resistant properties discussed in Example VI.
FIG. 8A shows the experimental design of the study described in Example VII.
FIG. 8B shows the experimental design of the study described in Example VII.
FIG. 8C shows the experimental design of the study described in Example VII.
FIG. 8D shows the experimental design of the study described in Example VII.
FIG. 9 shows the sensitivity of the chloride selective electrodes to chloride as described in Example VII.

### DETAILED DESCRIPTION

Disclosed herein is a selective electrode membrane having at least one matrix material and a silica. The disclosure is also directed to a selective electrode having a substrate with a selective electrode membrane on a surface thereof. Further disclosed are methods of making the selective electrode membranes and selective electrodes as described herein.

As used herein, a selective electrode refers to an electrochemical sensor whose function corresponds with the activity of a selected molecule or ion (alternatively referred to as a selected analyte) contained in a sample contacting the selective electrode. It should be understood that the electrochemical sensor may be a potentiometric sensor, an amperometric sensor, a voltametric sensor, an impedimetric sensor, a coulometric sensor, an optical sensor, or a combination thereof. Example ions according to the present disclosure include, but are not limited to, chloride ions, sodium ions, potassium ions, magnesium ions, calcium ions, protons (i.e., pH), bromide ions, ammonium ions, and combinations thereof. Example molecules according to the present disclosure include, but are not limited to, glucose, lactate, creatine, dissolved gasses (e.g., O₂ and/or CO₂), and combinations thereof. Example selective electrodes according to the present disclosure thus include, but are not limited to, chloride selective electrodes, sodium selective electrodes, potassium selective electrodes, magnesium selective electrodes, calcium selective electrodes, glucose selective electrodes, lactate selective electrodes, pH selective electrodes, bromide selective electrodes, ammonium selective electrodes, O₂ selective electrodes, CO₂ selective electrodes, and creatine selective electrodes.

A selective electrode membrane as used herein refers to a membrane that provides selective transfer of a selected ion or molecule. It should be understood that selective transfer of selected ions or molecules from a sample to a selective electrode membrane produces an electrical response.

According to some aspects, a selective electrode having a selective electrode membrane may, together with an external reference electrode, form a potentiometric cell assembly such that the potential difference between the selective electrode and the external reference electrode may be measured. In this way, the selected ion or molecule in a sample may be quantified. It should be understood that in the case of a potentiometric sensor, the potential difference measured between the selective electrode and the reference electrode is directly proportional to the concentration of selected ions or molecules in the sample. Typically, the voltage measured follows the Nernst Equation, which shows that the voltage measured is a directly related to the concentration of analyte (e.g., ions or molecules), and it is also a function of the analyte charge and the environmental temperature.

According to some aspects, a selective electrode having a selective electrode membrane may, together with a reference electrode and a counter electrode, measure the concentration of a selected ion or molecule. For example, in the case of amperometric or voltametric sensors, the current between the selective electrode and the counter electrode may be measured while maintaining a constant/controlled potential vias with the aid of the reference electrode. In this case, the measured current is proportional to the concentration of a selected ion or molecule. However, it should be understood that the present disclosure is not necessarily limited to these examples. For example, the measurement parameter may be impedance (in the case of impedimetric sensors), charge (in the case of coulometric sensors), and the like.

It should further be understood that selective electrodes as described herein may be susceptible to interferents (i.e., components in a sample that may provide a positive or negative bias for the ion or molecule of interest). Example interferents include, but are not limited to, bicarbonate, citrate, bromide, iodide, thiocyanate, salicylic acid, aspirin, vitamin C, and ibuprofen, ascorbate, and combinations thereof.

The selective membrane of the present disclosure may include at least one matrix material. The at least one matrix material may include a polymeric matrix material. Non-limiting examples of polymeric matrix materials include polyvinyl chlorides, polyurethanes, siloxane-based materials like PDMS, and combinations thereof. The matrix material may further include, for example, one or more plasticizers (e.g., dioctyl sebacate) and/or one or more conductive salts (e.g., potassium tetrakis(4-chlorophenyl)borate).

According to some aspects, the matrix material may include one or more polyurethanes. In some non-limiting examples, the one or more polyurethanes may each independently have one or more hydrophilic functional groups, one or more hydrophobic functional groups, or a combination thereof. Example hydrophobic functional groups include, but are not limited to, hydrophobic diols, polyester hydrophobic polyols, and combinations thereof. Non-limiting examples of polyurethanes useful according to the present disclosure include those described in U.S. Patent Publication No. 2015/368392 and U.S. Patent No. 8,802,770, the contents of which are expressly incorporated by reference herein.

According to some aspects, each of the one or more polyurethanes may have a certain water absorption. As used herein, "water absorption" refers to a material's ability to absorb liquid, such as water. According to some aspects, water absorption may be represented by the content of water absorbed by a material expressed as a percentage of the material's dry weight. In some non-limiting examples, each of the one or more polyurethanes may independently have a water absorption between about 10 and 110%, optionally between about 10 and 50%, optionally between about 10 and 30%, optionally between about 15 and 25%, and optionally about 20%.

In some non-limiting examples, each of the one or more polyurethanes may independently include a Tecophilic^{™} thermoplastic polyurethane manufactured by Lubrizol, such as HP-60D-20, HP-60D-35, HP-60D-60, HP-93A-100, or a combination thereof.

The selective membrane of the present disclosure may further include at least one selective transfer component. As used herein, a "selective transfer component" refers to a membrane component that allows for selective transfer of a selected ion or molecule across the selective membrane.

In some non-limiting examples, the selective transfer component may include an ionophore. As used herein, an ionophore refers to a molecule that provides for selective transfer of a selected ion across a membrane. Thus, the ionophore according to the present disclosure may include any ionophore useful for the selective transfer of any ion disclosed herein. Non-limiting examples of ionophores useful according to the present disclosure include chloride meso-Tetraphenylporphyrin manganese(III)-chloride complex; 4,5-Dimethyl-3,6-dioctyloxy-o-phenylene-bis(mercurytrifluoroacetate), ETH 9009; 3,6-Didodecyloxy-4,5-dimethyl-o-phenylene-bis(mercury chloride), ETH 9033; 4,5-Bis-[N'-(butyl)thioureido]-2,7-di-tert-butyl-9,9-dimethylxanthene; and combinations thereof. Other non-limiting examples of ionophores useful according to the present disclosure include Hydrogen ionophore I, Ammonium ionophore I, Hydrogen ionophore II, Nitrite ionophore I, Sodium ionophore X, Sodium ionophore IV, Calcium ionophore IV, Potassium ionophore I, Calcium ionophore I, protein tyrosine phosphatase, receptor type, U, Lead ionophore IV, Cadmium ionophore I, Sodium ionophore III, Chloride ionophore III, Hydrogen ionophore I - cocktail B, Magnesium ionophore III, Chloride ionophore II, Lithium ionophore VI, Magnesium ionophore I, Magnesium ionophore IV, Magnesium ionophore VI, Sodium ionophore VI, Calcium Ionophore A23187, Calcium ionophore II, Copper(II) ionophore I, Ammonium ionophore I - cocktail A, Calcium Ionophore IV - Cocktail for membranes, Potassium ionophore III, Potassium ionophore I - cocktail B, Nitrate Ionophore VI, Nitrate Ionophore VI, Chloride ionophore IV, Magnesium ionophore VII, Calcium Ionophore A23187 hemicalcium salt, Carbonate ionophore VII, Calcium Ionophore A23187 mixed calcium magnesium salt, Calcium ionophore I - cocktail A, Potassium ionophore I - cocktail A, Chloride ionophore I - cocktail A, Lithium ionophore IV, 4-Bromo-calcium Ionophore A23187, Calcium Ionophore A23187 hemimagnesium salt, Nonactin, Tridodecylamine, Ionomycin calcium salt, hemi-Calcium bis[4-(1,1,3,3-tetramethylbutyl)phenyl] phosphate, Tetrathiafulvalene 7,7,8,8-tetracyanoquinodimethane salt, Tetraoctylammonium nitrate, Tridodecylmethylammonium nitrate, 2-Mercaptopyridine N-oxide sodium salt, Pimaricin preparation, Tridodecylmethylammonium chloride, Chlorhexidine digluconate solution, Narasin from Streptomyces auriofaciens, Nystatin, Amphotericin B, Pimaricin, Amphotericin B from Streptomyces sp., Colistin sulfate salt, Gramicidin C from Bacillus brevis, Nisin from *Lactococcus lactis,* Colistin sodium methanesulfonate, Chlorhexidine diacetate salt hydrate, Nystatin Suspension, Valinomycin, Ionomycin from Streptomyces conglobatus, Surfactin, Amphotericin B solubilized, Econazole nitrate salt, Praziquantel, Alamethicin from Trichoderma viride, Polymyxin B solution, 4-tert-Butylcalix[4]arenetetraacetic acid tetraethyl ester, Polymyxin B sulfate salt, Phenazine methosulfate, Salinomycin, Filipin complex, Polymyxin B sulfate, Valinomycin, Streptomyces fulvissimus, Nigericin sodium salt, Gramicidin, Monensin sodium salt, Gramicidin A from Bacillus brevis, Clotrimazole, and combinations thereof.

In some non-limiting examples, the selective transfer component may include an epoxy resin component. As used herein, an "epoxy resin component" refers to a component having one or more curable resins each containing one or more epoxide groups, referred to herein as epoxy resins. The epoxy resins of the present disclosure may independently be saturated or unsaturated, linear or branched, aliphatic, cycloaliphatic, aromatic or heterocyclic, and/or may include one or more substituents that do not materially interfere with curing of the epoxy resin. According to some aspects, the epoxy resin may include a polyglycidyl ether of a polyhydric phenol. In some non-limiting examples, the epoxy resin may include epichlorohydrin-4,4'-isopropylidene diphenol resin; 2,2-bis(4-hydroxyphenyl) propane (bisphenol-A); 2,2-bis(4-hydroxy-3-tert-butylphenyl) propane; 1,1-bis(4-hydroxyphenyl) ethane; 1,1-bis(4-hydroxyphenyl) isobutane; 1,1-bis(4-hydroxy-3-alkylphenyl) ethane; or a combination thereof. Additionally or alternatively, the epoxy resin may include RP Bisphenol F-epichlorohydrin resin; a reaction product of bisphenol-A- and epoxy resin; 2-Propenoic acid, 2-methyl-, methyl ester, polymer with 1,3-butadiene, butyl 2-propenoate and ethenylbenzene; 2,2'-[methylenebix(p-phenyleneoxymethylene)]bisoxirane; dodecane-1-thiol; or a combination thereof. In some non-limiting examples, the epoxy resin may additionally or alternatively include a dihydric phenol obtained from the reaction of phenol with aldehydes such as formaldehyde (bisphenol-F).

According to some aspects, the epoxy resin component may include one or more secondary components. The one or more secondary components may include a component that provides one or more properties to a selective electrode membrane, such as moisture repellence and/or a reduction in shock and membrane stress. Non-limiting examples of secondary components include, but are not limited to, diiron trioxide.

According to some aspects, the epoxy resin component may include a medical grade epoxy resin. As used here, "medical grade" refers to a biocompatible composition. For example, a medical grade epoxide resin may be a biocompatible epoxide resin that meets the requirements of ISO 10993. In one non-limiting example, the medical grade epoxide resin is that of Henkel Loctite EA M-121HP Medical Device Adhesive, a commercial adhesive containing a medical grade epoxy resin mixed with a hardener component, as will be described herein.

The epoxy resin of the present disclosure may be curable by a hardener component having one or more curing agents that are sufficient to at least partially cure the epoxy resin. According to some aspects, the one or more curing agents may include one or more substituted aminophenols, aliphatic polyamines, aromatic polyamines, anhydrides, fatty acids, or a combination thereof. Non-limiting examples of curing agents include 2,4,6-tris(dimethylaminomethyl)phenol, bis[(dimethylamino)methyl]phenol, diethylene triamine, triethylene tetraamine, tetraethylene pentaamine, amino ethyl piperazine, an amine-epoxy resin adduct, polyethylene polyamine, metaphenylene diamine, diamino diphenyl sulfone, diethyltoluene diamine, nadic methyl anhydride, hexahydrophthalic anhydride, trimellitic anhydride, dodecenyl succinic anhydride, phthalic anhydride, methyl hexahydrophthalic anhydride, tetrahydrophthalic anhydride, methyl tetrahydrophthalic anhydride, and combinations thereof. Additionally or alternatively, curing agents may include C18 fatty acid dimer, tall oil fatty acid, triethylenetetramine polymer; 3,6,9-triazyndexamethylenediame; 3,6-diazaoctanethylenediamin; or a combination thereof.

The hardener component may further include an accelerator. As used herein, the term "accelerator" refers to a component that accelerates the rate of epoxy resin curing relative to the rate of curing without the accelerator. In some non-limiting examples, the accelerator may include a polymercaptan, such as pentaerythritol tetrakis (3-mercaptopropionate), trimethylolpropane tris(3-mercaptopropionate), ethylene glycol bis(3-mercaptopropionate), or a combination thereof.

The hardener component may further include one or more secondary components. The one or more secondary components may include a component that provides one or more properties to a selective electrode membrane, such as improved adhesion, flexural strength, improved Young's modulus, resistance to cracking and/or reduced biofouling. Non-limiting examples of secondary components include metals, oxides thereof, and combinations thereof. Non-limiting example metals useful according to the present disclosure include aluminum, titanium, silver, copper, and combinations thereof. In some non-limiting examples, the one or more secondary components may be provided in the form of particles, including nanoparticles.

The selective electrode membrane of the present disclosure may further include a silica. The silica may include nanoparticles of silica, alternatively referred to as "nanosilica." According to some aspects, the silica may include fumed silica, non-fumed silica, or a combination thereof.

According to some aspects, the silica may include silica particles (e.g., nanoparticles) that have been surface treated with one or more treating agents, alternatively referred to herein as "surface-treated" silica. In some non-limiting examples, the one or more treating agents may be sufficient to increase the silica's hydrophobicity relative to the silica without the surface treatment. Non-limiting examples of treating agents include trimethylchlorosilane, hexamethyldisilazane, polydimethylsiloxane, dimethyldichlorosilane, polydimethylsiloxane, and combinations thereof. Non-limiting examples of surface-treated silica include treated fumed silicas, such as CAB-O-SIL^{®} TS-610, CAB-O-SIL^{®} TS-720, and combinations thereof.

In some non-limiting examples, the silica may include a surface-treated fumed silica having a nominal BET surface area of base silica of at least about 100 m²/g, optionally at least about 110 m²/g, optionally at least about 120 m²/g, and optionally at least about 130 m²/g.

According to some aspects, the selective electrode membrane may include between about 5 and 25% w/w of the silica, optionally between about 10 and 25% w/w, optionally between about 10 and 20% w/w, optionally between about 15 and 20% w/w, and optionally between about 17 and 18% w/w.

According to some aspects, the selective electrode membrane may include between about 1 and 25% w/w of the silica, optionally between about 1 and 20% w/w, optionally between about 1 and 10% w/w, and optionally between about 4 and 6% w/w.

According to some aspects, the selective electrode membrane may include between about 5 and 15% w/w, and optionally between about 9 and 11% w/w.

According to some aspects, the selective electrode membrane may include between about 5 and 25% w/w of the silica, optionally between about 10 and 20% w/w, and optionally between about 14 and 16% w/w.

According to some aspects, the selective electrode membrane may include about 1% w/w of the silica, optionally about 2% w/w, optionally about 3% w/w, optionally about 4% w/w, optionally about 5% w/w, optionally about 6% w/w, optionally about 7% w/w, optionally about 8% w/w, optionally about 9% w/w, optionally about 10% w/w, optionally about 11% w/w, optionally about 12% w/w, optionally about 13% w/w, optionally about 14% w/w, optionally about 15% w/w, optionally about 16% w/w, optionally about 17% w/w, optionally about 18% w/w, optionally about 19% w/w, optionally about 20% w/w, optionally about 21% w/w, optionally about 22% w/w, optionally about 23% w/w, optionally about 24% w/w, optionally about 25% w/w, optionally about 26% w/w, optionally about 27% w/w, optionally about 28% w/w, optionally about 29% w/w, and optionally about 30% w/w.

According to some aspects, the selective electrode membrane may include at least about 1% w/w of the silica, optionally at least about 2% w/w, optionally at least about 3% w/w, optionally at least about 4% w/w, optionally at least about 5% w/w, optionally at least about 6% w/w, optionally at least about 7% w/w, optionally at least about 8% w/w, optionally at least about 9% w/w, optionally at least about 10% w/w, optionally at least about 11% w/w, optionally at least about 12% w/w, optionally at least about 13% w/w, optionally at least about 14% w/w, optionally at least about 15% w/w, optionally at least about 16% w/w, optionally at least about 17% w/w, optionally at least about 18% w/w, optionally at least about 19% w/w, optionally at least about 20% w/w, optionally at least about 21% w/w, optionally at least about 22% w/w, optionally at least about 23% w/w, optionally at least about 24% w/w, optionally at least about 25% w/w, optionally at least about 26% w/w, optionally at least about 27% w/w, optionally at least about 28% w/w, optionally at least about 29% w/w, and optionally at least about 30% w/w.

According to some aspects, the selective electrode membrane may include an amount of silica selected to provide an electrode having a certain sensitivity to one or more selected molecules and/or ions. In some non-limiting examples, the certain sensitivity may be greater than or less than the sensitivity provided by the same electrode membrane without silica.

For example, the selective electrode membrane may include an amount of silica selected to provide an electrode having a certain sensitivity to one or more selected molecules and/or ions, the certain sensitivity being is between about 1 and 50 mV/dec greater than the sensitivity of an electrode having the same electrode membrane without silica, optionally between about 1 and 10 mV/dec greater, optionally between about 10 and 20 mV/dec greater, optionally about 1 mV/dec greater, optionally about 2 mV/dec greater, optionally about 3 mV/dec greater, optionally about 4 mV/dec greater, optionally about 5 mV/dec greater, optionally about 6 mV/dec greater, optionally about 7 mV/dec greater, optionally about 8 mV/dec greater, optionally about 9 mV/dec greater, optionally about 10 mV/dec greater, optionally about 11 mV/dec greater, optionally about 12 mV/dec greater, optionally about 13 mV/dec greater, optionally about 14 mV/dec greater, optionally about 15 mV/dec greater, optionally about 16 mV/dec greater, optionally about 17 mV/dec greater, optionally about 18 mV/dec greater, optionally about 19 mV/dec greater, and optionally about 20 mV/dec greater.

In other non-limiting examples, the selective electrode membrane may include an amount of silica selected to provide an electrode having a certain sensitivity to one or more selected molecules and/or ions, the certain sensitivity being between about 1 and 50 mV/dec less than the sensitivity of an electrode having the same electrode membrane without silica, optionally between about 1 and 10 mV/dec less, optionally between about 10 and 20 mV/dec less, optionally about 1 mV/dec less, optionally about 2 mV/dec less, optionally about 3 mV/dec less, optionally about 4 mV/dec less, optionally about 5 mV/dec less, optionally about 6 mV/dec less, optionally about 7 mV/dec less, optionally about 8 mV/dec less, optionally about 9 mV/dec less, optionally about 10 mV/dec less, optionally about 11 mV/dec less, optionally about 12 mV/dec less, optionally about 13 mV/dec less, optionally about 14 mV/dec less, optionally about 15 mV/dec less, optionally about 16 mV/dec less, optionally about 17 mV/dec less, optionally about 18 mV/dec less, optionally about 19 mV/dec less, and optionally about 20 mV/dec less.

In some non-limiting examples wherein the selective electrode membrane is provided in a sensing assembly with one or more reference electrodes, the one or more reference electrodes may each independently be sensitive to the selected molecules and/or ions. In these examples, the certain sensitivity of the selective electrode membrane may be greater than or less than the sensitivity of the one or more reference electrodes to the selected molecules and/or ions. In this way, the selective electrode membrane may provide a compensation selective electrode in a sensing assembly having one or more reference electrodes sensitive to the same analyte. In some non-limiting examples, the one or more reference electrodes include one or more in-line reference electrodes.

For example, the selective electrode membrane may include an amount of silica selected to provide an electrode having a certain sensitivity to one or more selected molecules and/or ions, the certain sensitivity being between about 1 and 50 mV/dec greater than the sensitivity of one or more reference electrodes, optionally between about 1 and 10 mV/dec greater, optionally between about 10 and 20 mV/dec greater, optionally about 1 mV/dec greater, optionally about 2 mV/dec greater, optionally about 3 mV/dec greater, optionally about 4 mV/dec greater, optionally about 5 mV/dec greater, optionally about 6 mV/dec greater, optionally about 7 mV/dec greater, optionally about 8 mV/dec greater, optionally about 9 mV/dec greater, optionally about 10 mV/dec greater, optionally about 11 mV/dec greater, optionally about 12 mV/dec greater, optionally about 13 mV/dec greater, optionally about 14 mV/dec greater, optionally about 15 mV/dec greater, optionally about 16 mV/dec greater, optionally about 17 mV/dec greater, optionally about 18 mV/dec greater, optionally about 19 mV/dec greater, and optionally about 20 mV/dec greater.

In other non-limiting examples, the selective electrode membrane may include an amount of silica selected to provide an electrode having a certain sensitivity to one or more selected molecules and/or ions, the certain sensitivity being between about 1 and 50 mV/dec less than the sensitivity of one or more reference electrodes, optionally between about 1 and 10 mV/dec less, optionally between about 10 and 20 mV/dec less, optionally about 1 mV/dec less, optionally about 2 mV/dec less, optionally about 3 mV/dec less, optionally about 4 mV/dec less, optionally about 5 mV/dec less, optionally about 6 mV/dec less, optionally about 7 mV/dec less, optionally about 8 mV/dec less, optionally about 9 mV/dec less, optionally about 10 mV/dec less, optionally about 11 mV/dec less, optionally about 12 mV/dec less, optionally about 13 mV/dec less, optionally about 14 mV/dec less, optionally about 15 mV/dec less, optionally about 16 mV/dec less, optionally about 17 mV/dec less, optionally about 18 mV/dec less, optionally about 19 mV/dec less, and optionally about 20 mV/dec less.

In some non-limiting examples, the selective electrode membrane of the present disclosure may further include an ion exchange component, including trialkylammonium ion-exchangers. Non-limiting examples of trialkylammonium ion-exchangers include chloride salts of tripropylammonium, tributylammonium, tripentylammonium, trihexylammonium, trioctylammonium, and tridodecylammonium, and combinations thereof.

According to some aspects, the selective electrode membrane may provide a selective electrode having acceptable sensitivity to selected ion or molecules for a certain period of time after exposure to at least one sample containing the selected ion or molecule. In some non-limiting examples, the certain period of time may be at least about 1 day, optionally at least about 2 days, optionally at least about 3 days, optionally at least 4 days, optionally at least 5 days, optionally at least 6 days, optionally at least about 1 week, optionally at least about 2 weeks, optionally at least about 3 weeks, and optionally at least about 4 weeks.

The disclosure is also directed to a selective electrode, and in particular, a selective electrode having a substrate with a selective electrode membrane on a surface thereof. According to some aspects, the substrate may include an electrode.

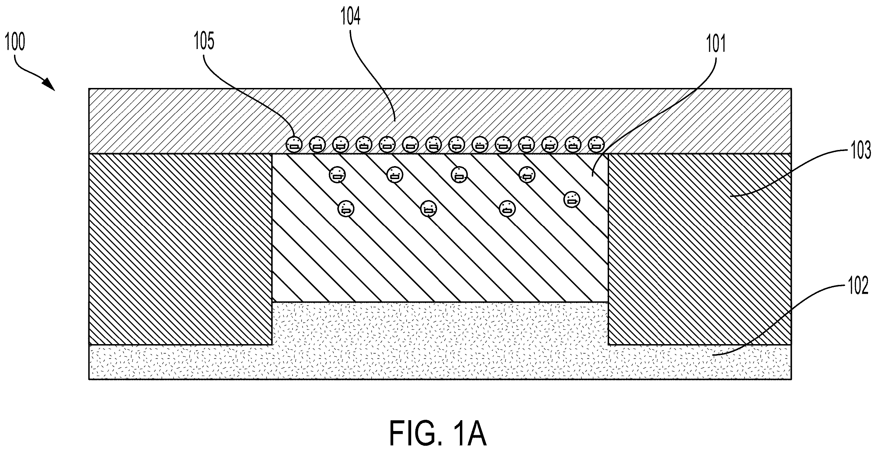

Referring to FIG. 1A, an example selective electrode 100 according to aspects of the present disclosure may include a selective electrode membrane 101 as described herein provided on a surface of an electrode 102. According to some aspects, electrode 102 may include an electrical conductor. Non-limiting examples of electrical conductors include metallic-based conductors (e.g., silver, silver chloride, silver bromide, silver iodide gold, platinum, copper, aluminum, and combinations thereof), graphite or carbon, conductive polymer and combinations thereof.

The selective electrode 100 may further include an electrically insulated substrate 103 at least partially surrounding selective electrode membrane 101. Insulated substrate 103 may include one or more insulating materials. As shown, insulating substrate 103 may define a well for selective electrode membrane 101. In some non-limiting examples, the insulating material may include a polymer (e.g., a polyimide, a liquid crystal polymer, polyvinyl chloride (PVC), a polycarbonate (PC)), silicon, silicon nitride, an epoxy, glass, ceramic, or a combination thereof. The insulated substrate 103 may form one or more walls of a cavity in which electrode 102 (having selective electrode membrane 101 on a surface thereof) is provided. However, it should be understood that the present disclosure is not necessarily limited to this example. It should also be understood that while FIG. 1A includes insulated substrate 103 forming a single cavity containing selective electrode membrane 101, the disclosure is not limited in this way. For example, substrate 103 may include two, three, four, five, or more cavities, each independently including an electrode that is the same as or different from the electrode of another cavity. Further, each cavity may contain therein a selective electrode membrane that is the same as or different from the selective electrode membrane contained in another cavity.

Additionally, a sample 104 having ions or molecules 105 to be analyzed by selective electrode 100 is deposited on the selective electrode 100. It should be understood that as used herein, a "sample" refers to any liquid containing ions and/or molecules. Non-limiting examples of samples include biological samples, such as samples containing whole blood, serum, plasma, sputum, lymphatic fluid, semen, vaginal mucus, feces, urine, spinal fluid, saliva, stool, cerebral spinal fluid, tears, mucus, biological tissue (e.g., hair, skin, sections or excised tissues), or a combination thereof. Other non-limiting examples of samples include non-biological samples, such as drinking water.

According to some aspects, the selective electrodes of the present disclosure may, in conjunction with an external reference electrode and/or counter electrode, form a cell assembly.

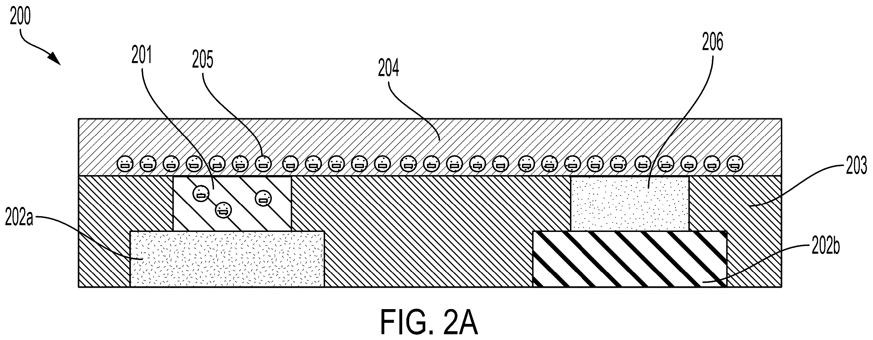

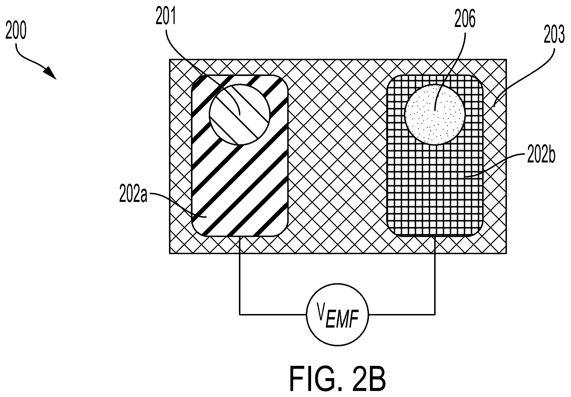

Referring to FIGS. 2A and 2B, an example potentiometric cell assembly 200 according to aspects of the present disclosure may include an insulated substrate 203, similar to insulated substrate 103 as described in relation to FIG. 1A. Potentiometric cell assembly 200 may further include reference electrode 202b as described herein. Further, the potentiometric cell assembly 200 includes a selective electrode membrane 201 as described herein and a reference electrode membrane 206, such as a membrane including a sulfonated tetrafluoroethylene based fluoropolymer-copolymer. It should be understood, however, that the disclosure is not necessarily limited in this way, as any reference or pseudo-reference electrode may be used, including a pseudo-reference silver or silver|silver chloride electrode, optionally in contact with a reference electrode solution (e.g. saturated KCl or NaCl) that is sealed using standard reference electrode porous frits.

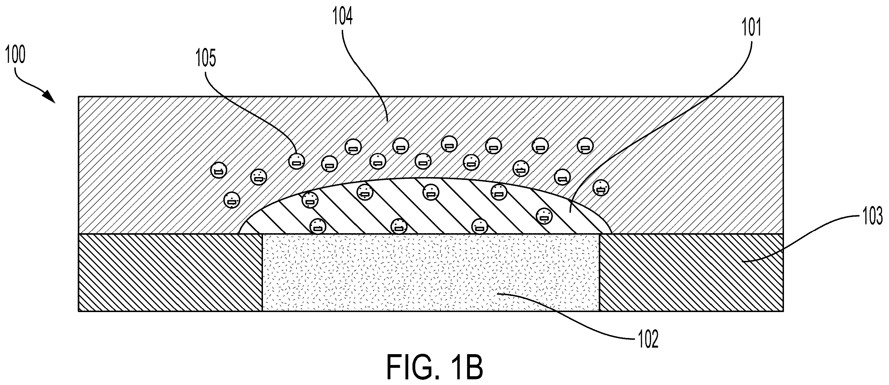

Referring to FIG. 1B, another example of a selective electrode 100 according to aspects of the present disclosure includes, similar to FIG. 1A, an electrode 102 and an insulated substrate 103. In this example, electrode 102 and insulated substrate 103 form a substantially flat surface on which selective electrode membrane 101 may be provided.

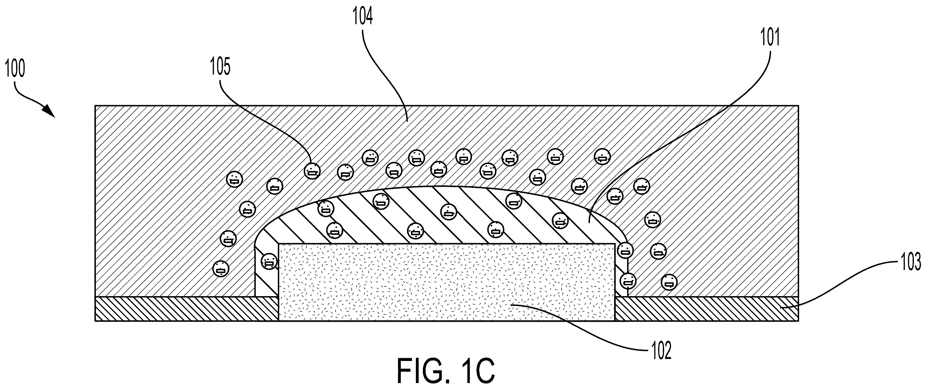

Referring to FIG. 1C, another example of a selective electrode 100 according to aspects of the present disclosure includes electrode 102 that may protrude relative to an insulated substrate 103. Electrode 102 may include any shape suitable for a selective electrode, such as a plate or a wire. In this example, selective electrode membrane 101 may be provided so as to at least partially cover electrode 102.

Referring back to FIGS. 2A and 2B, it should be understood that potentiometric cell assembly 200 may be provided in contact with a sample 204 in order to determine a concentration of ions 205 contained therein. In particular, the concentration of ions 205 contained in sample 204 may be determined using the Nernst Equation: ${V}_{EMF} = {E}_{0} + ln 10 \frac{RT}{nF} Log \frac{\left[{A}_{1}\right]}{\left[{A}_{2}\right]}$
wherein *E*₀ is the standard potential, R is the universal gas constant, T is the temperature in Kelvin, n is the ion charge, F is the Faraday constant and A1 and A2 are the ion concentrations.

It should be understood, however, that this disclosure is not limited to potentiometric cells assemblies as shown in FIGS. 2A and 2B.

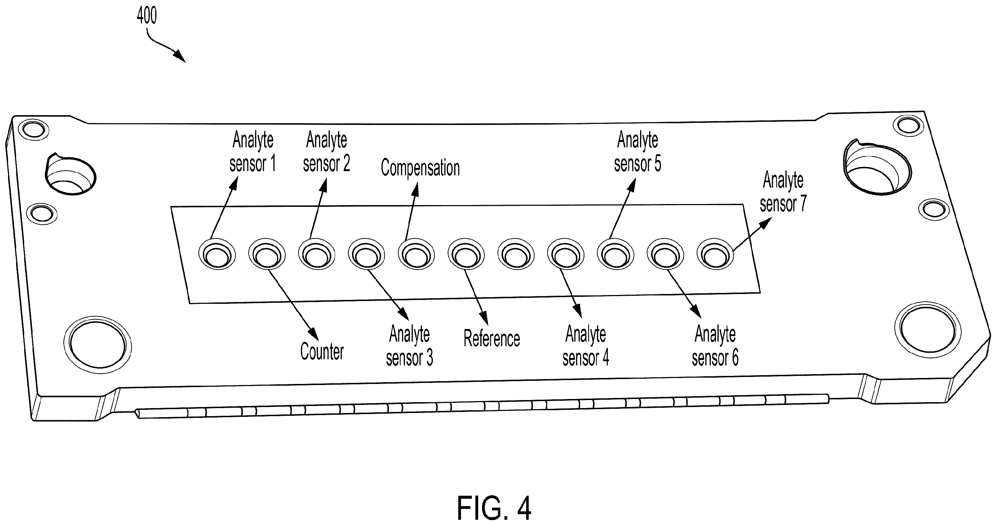

For example, FIG. 4 shows another example of a sensing assembly according to aspects of the present disclosure. As shown in FIG. 4, sensing assembly 400 may include a plurality of selective electrodes (which, in this example, include analyte sensors 1-7), a counter electrode, a compensation electrode (i.e., an electrode having the selective electrode membrane as described herein), and an in-line reference electrode. As shown in FIG. 4, each of the electrodes may be provided in the same, primary fluid channel of the sensing assembly.

Again, however, the present disclosure is not limited to the example shown in FIG. 4. For example, a sensing assembly according to the present disclosure may include two or more fluid channels, each containing one or more electrodes as described herein. Additionally or alternatively, a sensing assembly according to the present disclosure may include only a portion of the electrodes shown in FIG. 4 and/or one or more additional electrodes, in the same or different order from that shown in FIG. 4.

The present disclosure is also directed to methods of making the selective electrode membranes and selective electrodes as described herein.

According to some aspects, the method may include combining two or more of the components described herein and a solvent to provide a solution, providing the solution on a surface, and drying the solution to provide a selective electrode membrane as described herein.

According to some aspects, at least the matrix material and the silica may be combined with a solvent to provide a solution. Example solvents useful according to the present disclosure include, but are not limited to, organic solvents (e.g., cyclohexanone, tetrahydrofuran, dimethylacetamide). In some non-limiting examples, the solvent includes cyclohexanone and tetrahydrofuran. In some non-limiting examples, the solvent includes dimethylacetamide.

In some non-limiting examples, the solution may be prepared at an elevated temperature. According to some aspects, the elevated temperature may be between about 30 and 70 °C, optionally between about 40 and 60 °C, and optionally about 50 °C. Providing the solution my further include stirring for a certain stirring time. In some non-limiting examples, the stirring time may be between about 10 minutes and 3 hours, optionally between about 10 minutes and 2 hours, optionally between about 10 minutes and 1 hour, and optionally about 30 minutes.

According to some aspects, the method may include providing the solution on a surface. In some non-limiting examples, the surface may include an inert surface. Additionally or alternatively, the surface may include components of a selective electrode as described herein. For example, the solution may be provided on a surface of a reference electrode as described herein. In some non-limiting examples, the reference electrode may be provided within a cavity formed in an insulated substrate as described herein. According to some aspects, the solution may be provided on the surface in a reduced moisture environment. As used herein, the term "reduced moisture environment" may refer to an environment having 30% RH or less.

The method may further include drying the solution to provide a selective electrode membrane as described herein. The solution may be dried at a drying temperature for a drying time sufficient for all or a portion of the solvent to evaporate. It should be understood that drying temperatures and drying times may depend on the concentration of solvent in the solution and/or the amount of solution to be dried.

In some non-limiting examples, the drying temperature may be room temperature (i.e., about 20 to 22 °C). In some non-limiting examples, the drying temperature may be performed at an elevated temperature, such as between about 40 and 120 °C, optionally between about 40 and 90 °C, optionally between about 40 and 80 °C, optionally between about 50 and 70 °C, and optionally about 60 °C. In some non-limiting examples, the drying time may be between about 10 minutes and 24 hours, optionally between about 10 minutes and 12 hours, and optionally between about 1 hour and 10 hours. According to some aspects, the solution may be dried in a reduced moisture environment, such as in an oven.

### EXAMPLES

### EXAMPLE I(a): Preparation of Inventive Chloride Selective Electrode

First, a solution containing an epoxy resin component, a hardener component, a polyurethane, a silica, and a solvent was prepared. The epoxy resin component and the hardener component were provided as a medical grade commercial product, LOCTITE^{®} EA M-21HP manufactured by Henkel. The polyurethane included Tecophilic^{™} HP-60D-20 manufactured by Lubrizol, the silica included CAB-O-SIL^{®} TS-720, and the solvent included dimethylacetamide. To prepare the solution, the polyurethane was first dissolved into the solvent at 55 °C by stirring for one hour. Then, the epoxy resin component, the hardener component, and the silica were added at room temperature. The solution was then stirred for another hour.

**Table 1**

| **Component** | **Mass (g)** | **Solution Concentration (% w/w)** | **Solid Composition (% w/w)** | **Solid/Total Weight (% w/w)** | **Solid/Solvent (% w/w)** |
|---|---|---|---|---|---|
| Hardener Component | 0.125 | 3.6 | 18.52 | | |
| Epoxy Resin Component | 0.2 | 5.7 | 29.63 | 19.4 | 24.01 |
| Polyurethane | 0.25 | 7.2 | 37.04 | | |
| Silica | 0.1 | 2.9 | 14.81 | | |
| Dimethylacetamide | 2.811 | 80.6 | -- | | |

Then, enough of the solution from Table 1 was provided to fill cavities formed in an insulated substrate with a conductive bottom surface and allowed to dry at room temperature to provide chloride selective electrode membranes.

### EXAMPLE I(b): Preparation of Comparative Chloride Selective Electrode

First, a solution containing an epoxy resin component, a hardener component, a polyurethane, and a solvent was prepared. The epoxy resin component and the hardener component were provided as a medical grade commercial product, LOCTITE^{®} EA M-21HP manufactured by Henkel. The polyurethane included Tecophilic^{™} HP-60D-20 manufactured by Lubrizol, and the solvent included dimethylacetamide. To prepare the solution, the polyurethane was first dissolved into the solvent at 55 °C by stirring for one hour. Then, the epoxy resin component, and the hardener component were added at room temperature. The solution was then stirred for another hour.

**Table 2**

| **Component** | **Mass (g)** | **Solution Concentration (% w/w)** | **Solid Composition (% w/w)** | **Solid/Total Weight (% w/w)** | **Solid/Solvent (% w/w)** |
|---|---|---|---|---|---|
| Epoxy Resin Component | 0.25 | 4.95 | 40 | | |
| Hardener Component | 0.125 | 2.47 | 20 | 10.5 | 11.75 |
| Polyurethane | 0.25 | 4.95 | 40 | | |
| Dimethylacetamide | 4.43 | 87.64 | -- | | |

Then, enough of the solution from Table 2 was provided to fill cavities formed in an insulated substrate with a conductive bottom surface and allowed to dry at room temperature to provide chloride selective electrode membranes.

### EXAMPLE II: Comparison of Chloride Selective Electrodes

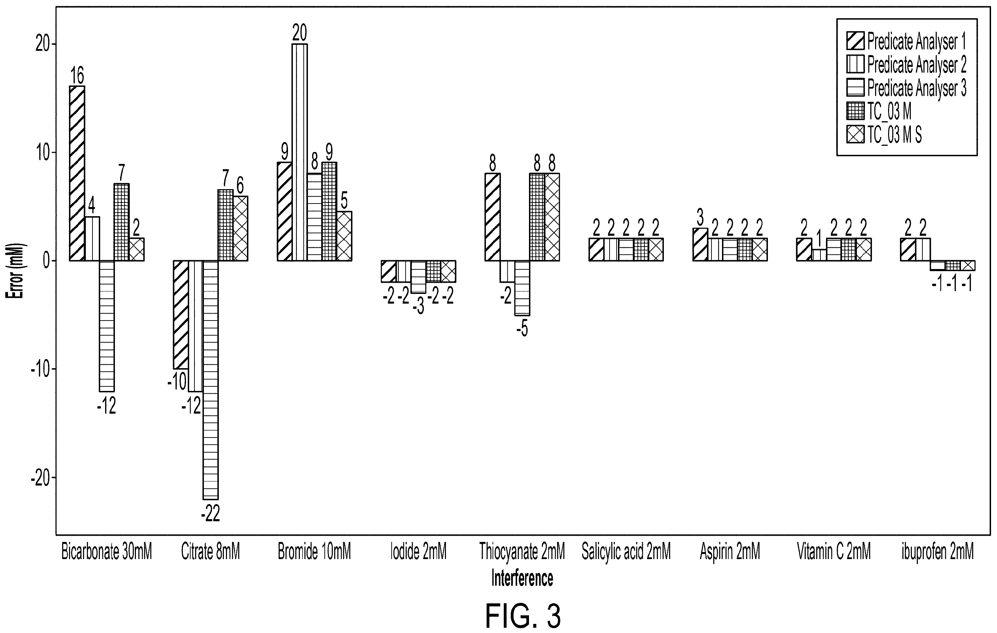

The performance of the chloride selective electrodes prepared according to Examples I(a) and I(b) were analyzed. In particular, the chloride selective electrodes were exposed to blood samples with a known concentration of chloride ions and adjusted to have a certain interferent concentration, specifically 30 mM of bicarbonate, 8 mM of citrate, 10 mM of bromide, 2 mM of iodide, 2 mM of thiocyanate, 2 mM of salicylic acid, 2 mM of Aspirin, 2 mM of Vitamin C, or 2 mM of ibuprofen, all of which represent known interferents for chloride selective electrode membranes. FIG. 3 shows the error in chloride ion measurement for each membrane.

Referring to FIG. 3, the electrode prepared according to Example I(a) (referred to as TC_03 M S in FIG. 3) showed significantly less error across interferents when compared with the electrode prepared according to Example I(b) (referred to as TC_03 M in FIG. 3), which included the same components as the electrode of Example I(a) except that it did not include silica. In addition, as shown in FIG. 3, the electrode prepared according to Example I(a) showed significantly less error across interferents when compared with three commercial blood gas analyzers (referred to as Predictor Analyzers 1, 2, and 3 in FIG. 3).

### EXAMPLE III: Modulation of Selective Electrode Sensitivity

First, three membrane solutions were prepared, each containing an epoxy resin component, a hardener component, a polyurethane, silica, and a solvent according to Table 3 below.

**Table 3**

| **Component** | **Control (0% Silica)** | **5% Silica** | **15% Silica** |
|---|---|---|---|
| Hardener Component (g) | 0.1 | 0.1 | 0.1 |
| Epoxy Resin Component (g) | 0.2 | 0.2 | 0.2 |
| Polyurethane (g) | 0.2 | 0.2 | 0.2 |
| Silica (g) | 0 | 0.025 | 0.075 |
| Dimethylacetamide (g) | 3 | 3 | 3 |

The epoxy resin component and the hardener component were provided as a medical grade commercial product, LOCTITE^{®} EA M-21HP manufactured by Henkel. The polyurethane included Tecophilic^{™} HP-60D-20 manufactured by Lubrizol, and the solvent included dimethylacetamide. The silica included CAB-O-SIL^{®} TS-720.

To prepare the solution, the polyurethane was first dissolved into the solvent at 55 °C by stirring for one hour. Then, the epoxy resin component, the hardener component, and the silica were added at room temperature. The solution was then stirred for another hour. Then, enough of each solution was provided to fill cavities formed in an insulated substrate with a conductive bottom surface and allowed to dry at room temperature to provide chloride selective electrodes having chloride selective electrode membranes.

### EXAMPLE IV: Comparison of Chloride Selective Electrodes

The performance of the chloride selective electrodes prepared according to Example III was analyzed by exposing the electrodes to calibration solutions containing various chloride concentrations (i.e., 100 mM, 120 mM, 140 mM, and 150 mM) and various interferents (50 mM bicarbonate, 8mM citrate, 10 mM bromide, 2 mM iodide, 2 mM thiocyanate).

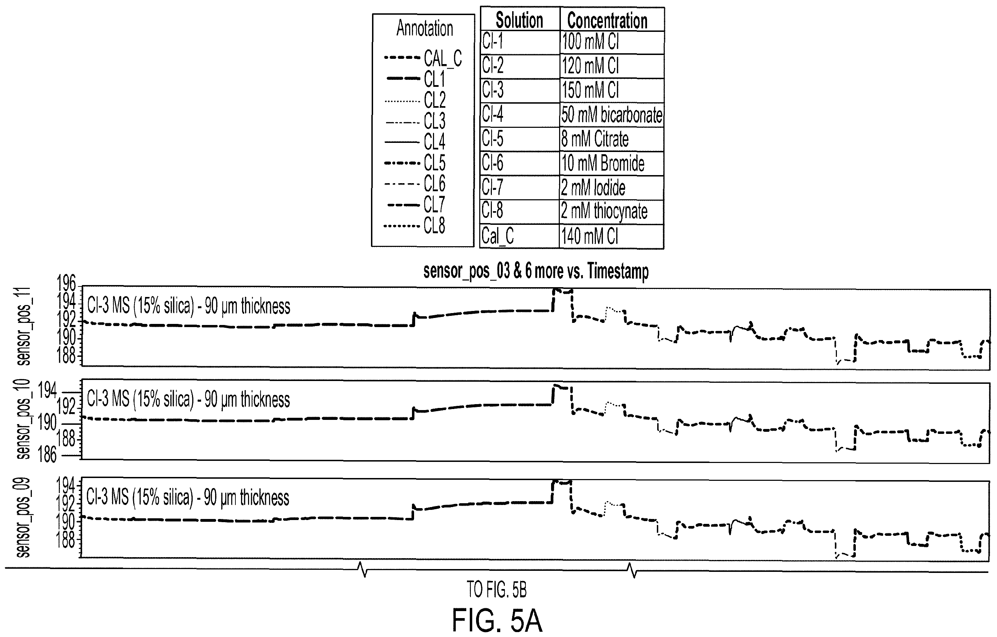

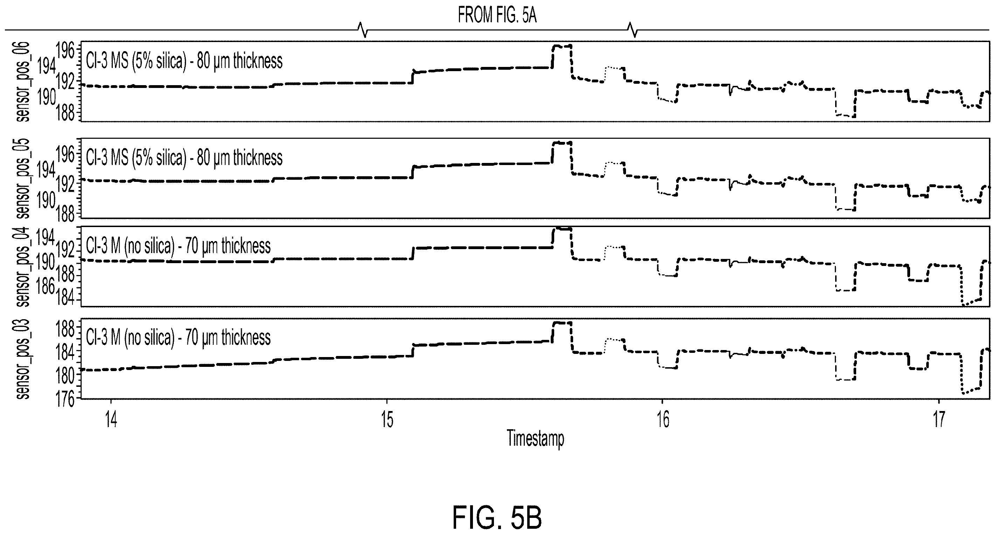

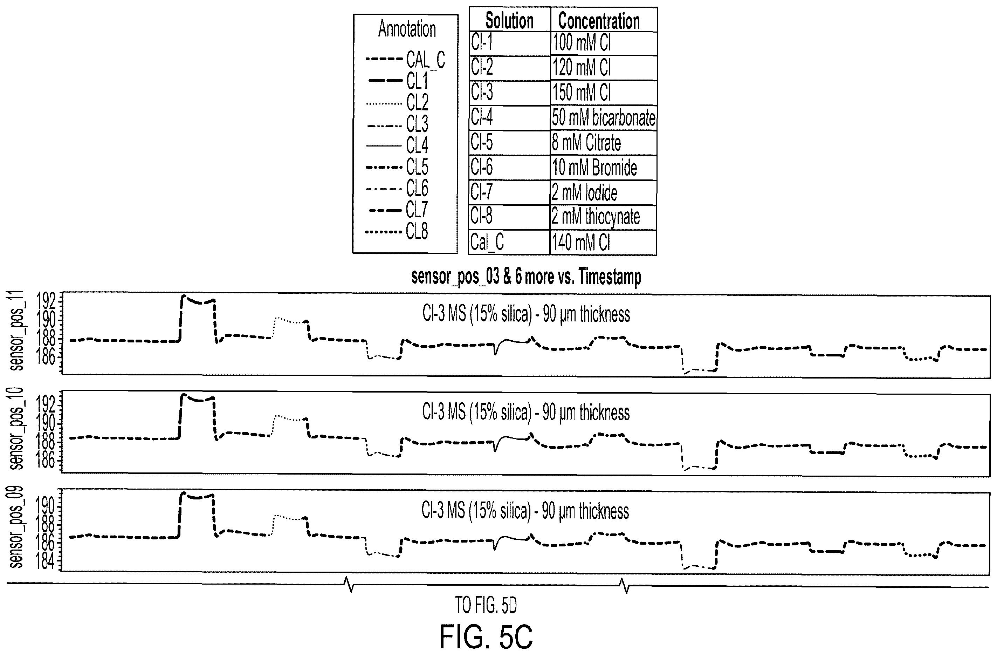

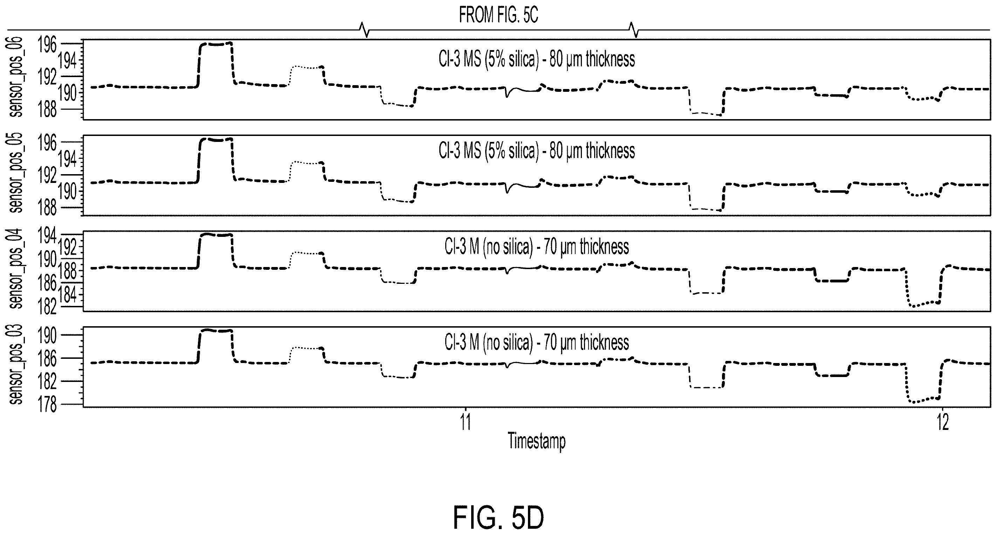

FIGS. 5A-D show the interference-resistant properties of the electrodes on day one (FIGS. 5A and 5B) and day three (FIGS. 5C and 5D). As shown in FIGS. 5A-D, the addition of silica to the membranes resulted in the reduction of cross-interference, particularly by thiocyanate, iodine, bromide, and bicarbonate.

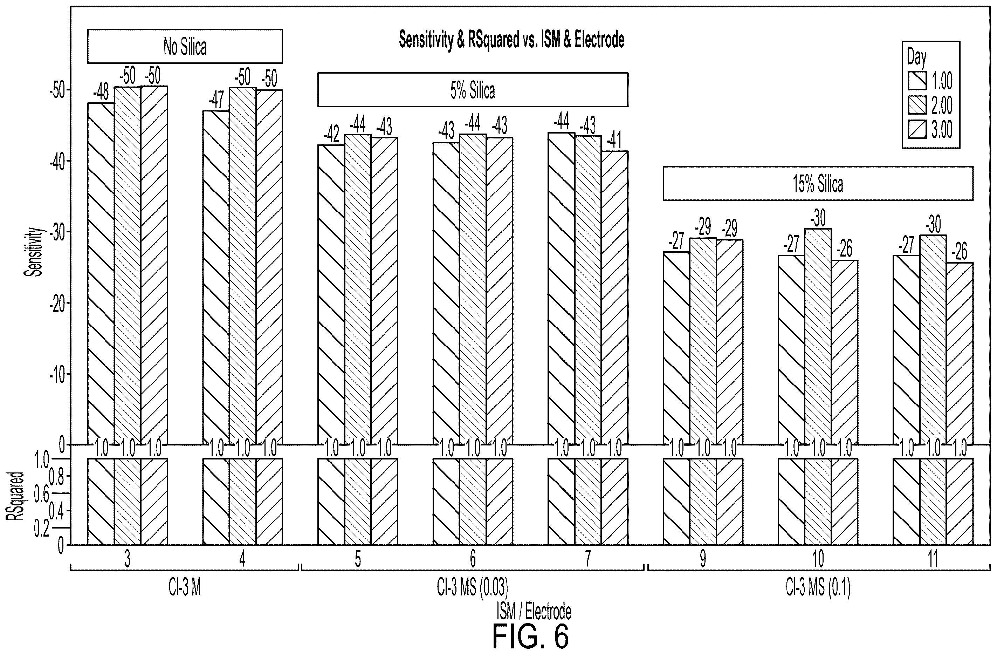

The sensitivity of the electrodes was then analyzed by exposing the electrodes to the calibration solutions described above without any interferents. FIG. 6 shows the results of this study on days one, two, and three. As shown in FIG. 6, the inclusion of silica allowed for control over the chloride sensitivity of the chloride selective electrodes.

### EXAMPLE V: Modulation of Selective Electrode Sensitivity

First, four solutions were prepared, each containing an epoxy resin component, a hardener component, a polyurethane, and a solvent according to Table 4 below.

**Table 4**

| **Component** | **Mass (g)** |
|---|---|
| Hardener Component | 0.125 |
| Epoxy Resin Component | 0.2 |
| Polyurethane | 0.25 |
| Dimethylacetamide | 4.43 |

The epoxy resin component and the hardener component were provided as a medical grade commercial product, LOCTITE^{®} EA M-21HP manufactured by Henkel. The polyurethane included Tecophilic^{™} HP-60D-20 manufactured by Lubrizol, and the solvent included dimethylacetamide. Each solution also included silica in the amounts shown in Table 5. The silica included CAB-O-SIL^{®} TS-720.

**Table 5**

| **Solution** | **Mass of Silica (g)** |
|---|---|
| Control | 0 |
| 5 wt% Silica | 0.03 |
| 10 wt% Silica | 0.06 |
| 15 wt% Silica | 0.1 |

To prepare the solution, the polyurethane was first dissolved into the solvent at 55 °C by stirring for one hour. Then, the epoxy resin component, the hardener component, and the silica were added at room temperature. The solution was then stirred for another hour. Then, enough of each solution was provided to fill cavities formed in an insulated substrate with a conductive bottom surface and allowed to dry at room temperature to provide chloride selective electrodes having chloride selective electrode membranes.

### EXAMPLE VI: Comparison of Chloride Selective Electrodes

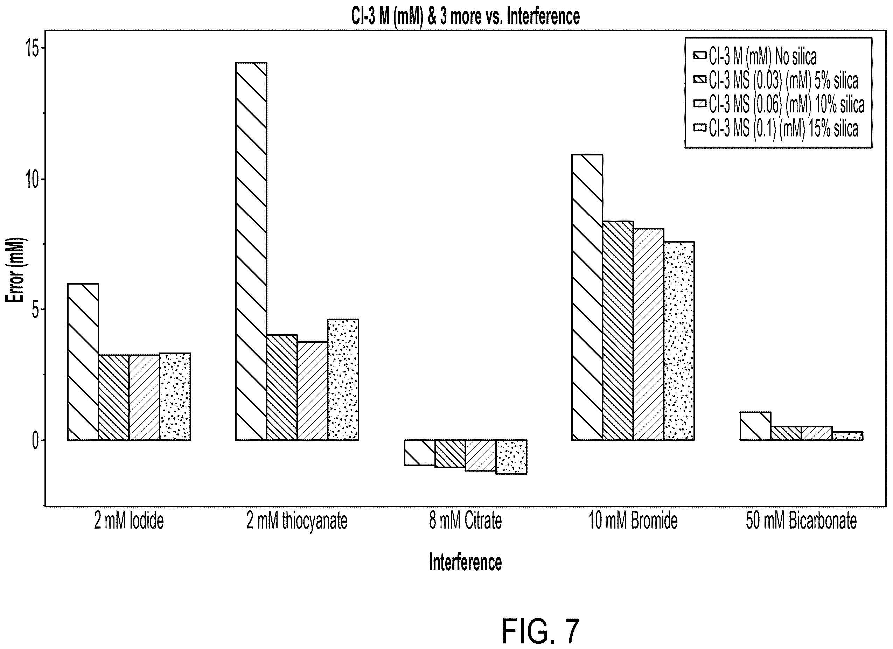

The performance of the chloride selective electrodes prepared according to Example V was then analyzed by exposing the electrodes to calibration solutions as described in Example IV. FIG. 7 shows the interference-resistant properties of the electrodes. As shown in FIG. 7, the addition of silica to the membranes resulted in the reduction of cross-interference.

### EXAMPLE VII: Comparison of Chloride Selective Electrodes Sensitivities in Sensing Assembly Having In-Line Reference Electrodes

A sensing assembly having an in-line reference electrode sensitive to chloride was prepared. The sensing assembly included two chloride selective electrodes.

To prepare the two chloride selective electrodes, first, two solutions were prepared, each containing an epoxy resin component, a hardener component, a polyurethane, silica, and a solvent according to Table 6 below.

**Table 6**

| **Component** | **10% Silica** | **15% Silica** |
|---|---|---|
| Hardener Component (g) | 0.1 | 0.1 |
| Epoxy Resin Component (g) | 0.2 | 0.2 |
| Polyurethane (g) | 0.2 | 0.2 |
| Silica (g) | 0.05 | 0.075 |
| Dimethylacetamide (g) | 3 | 3 |

The epoxy resin component and the hardener component were provided as a medical grade commercial product, LOCTITE^{®} EA M-21HP manufactured by Henkel. The polyurethane included Tecophilic^{™} HP-60D-20 manufactured by Lubrizol, and the solvent included dimethylacetamide. The silica included CAB-O-SIL^{®} TS-720.

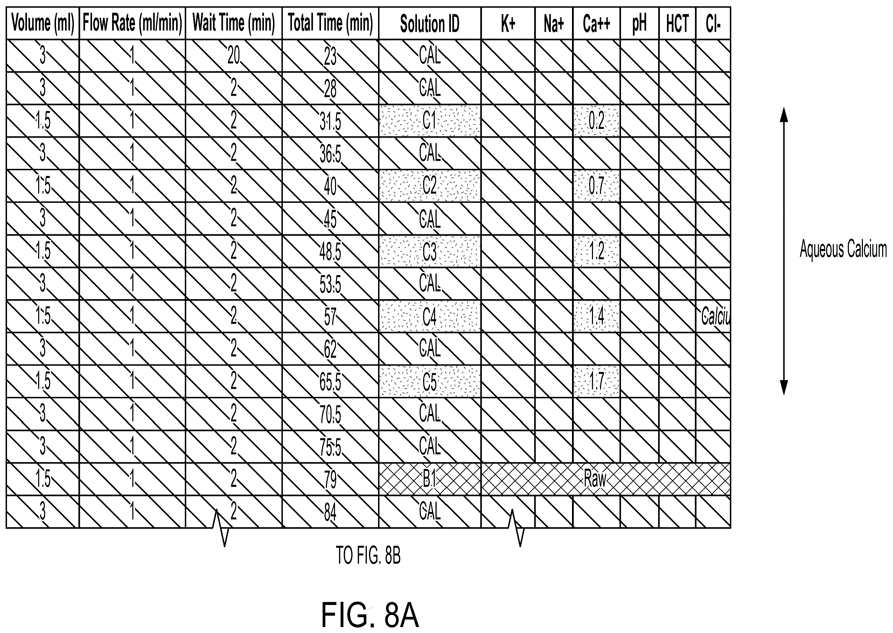

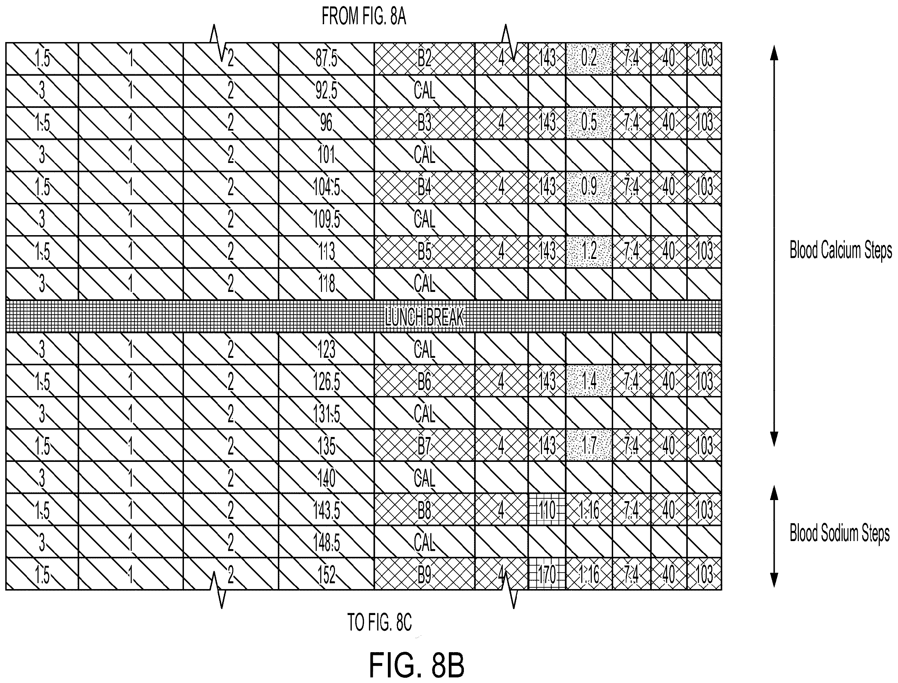

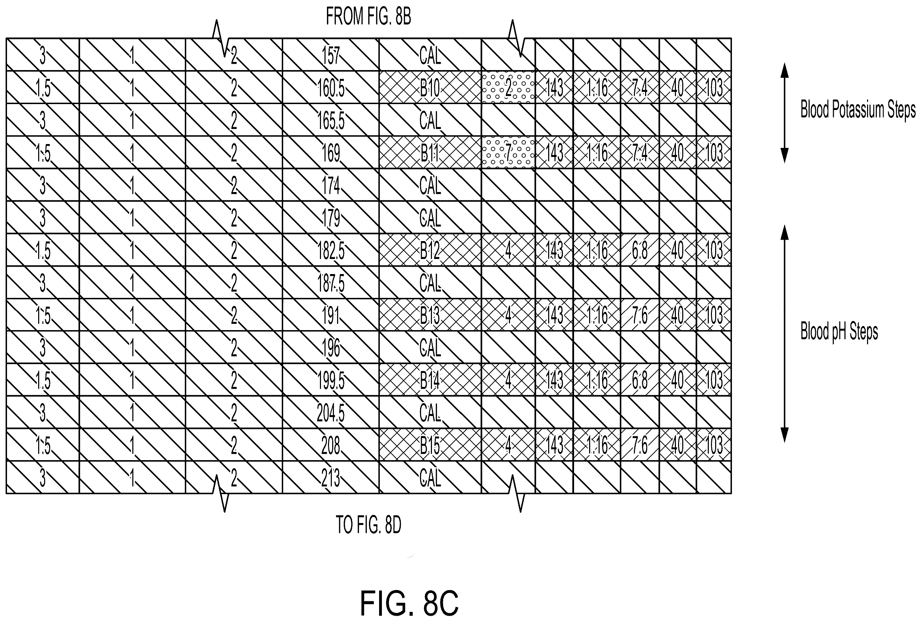

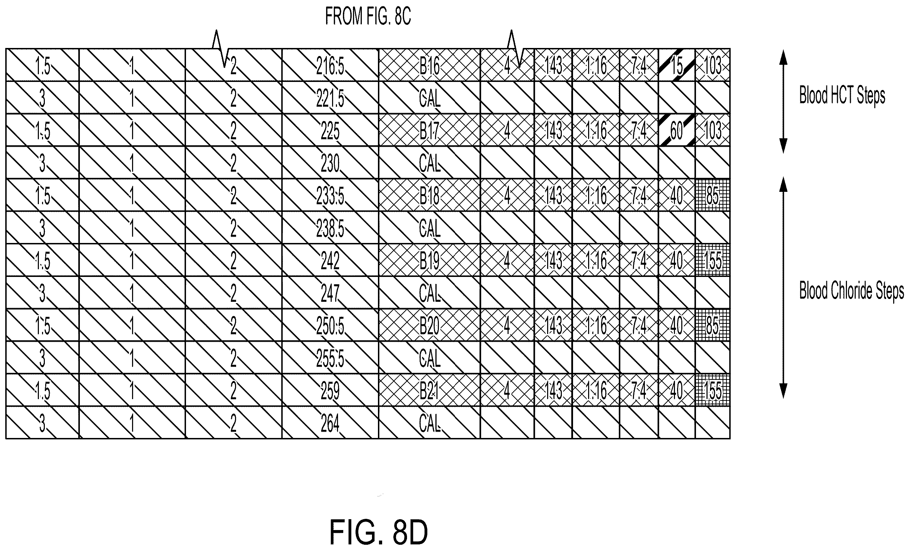

To prepare the solution, the polyurethane was first dissolved into the solvent at 55 °C by stirring for one hour. Then, the epoxy resin component, the hardener component, and the silica were added at room temperature. The solution was then stirred for another hour. Then, enough of each solution was provided to fill cavities formed in an insulated substrate with a conductive bottom surface and allowed to dry at room temperature to provide chloride selective electrodes having chloride selective electrode membranes. The sensitivities of the chloride selective electrodes were then analyzed by exposing the electrodes to steps of an aqueous calcium solution, steps of a blood calcium sample, steps of a blood sodium sample, steps of a blood potassium sample, steps of a blood pH sample, step of a blood HCT sample, and steps of a blood chloride sample. FIGS. 8A-D shows the experimental design.

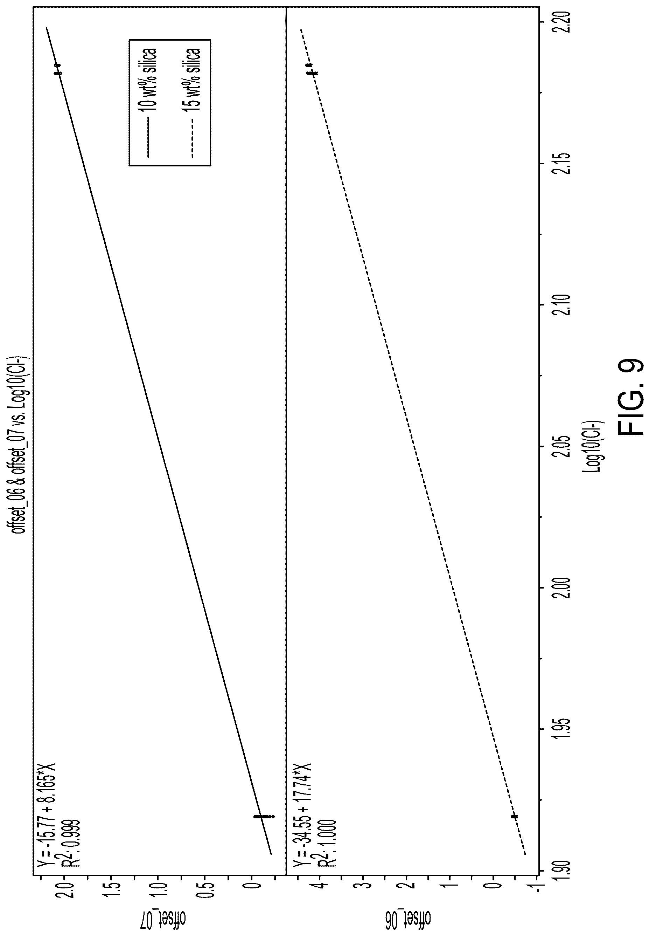

As shown in FIG. 9, by increasing the amount of silica in the membrane, the sensitivity of the membrane to chloride was increased to provide a different sensitivity than that of the in-line reference electrode, thereby providing a compensation selective electrode. It was thus determined that silica can be used to modulate the sensitivity of selective membranes to selected analytes.

While the aspects described herein have been described in conjunction with the example aspects outlined above, various alternatives, modifications, variations, improvements, and/or substantial equivalents, whether known or that are or may be presently unforeseen, may become apparent to those having at least ordinary skill in the art. Accordingly, the example aspects, as set forth above, are intended to be illustrative, not limiting. Various changes may be made without departing from the spirit and scope of the disclosure. Therefore, the disclosure is intended to embrace all known or later-developed alternatives, modifications, variations, improvements, and/or substantial equivalents.

Thus, the claims are not intended to be limited to the aspects shown herein, but are to be accorded the full scope consistent with the language of the claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

Herein, the recitation of numerical ranges by endpoints (e.g. between about 50:1 and 1:1, between about 100 and 500 °C, between about 1 minute and 60 minutes) include all numbers subsumed within that range, for example, between about 1 minute and 60 minutes includes 21, 22, 23, and 24 minutes as endpoints within the specified range. Thus, for example, ranges 22-36, 25-32, 23-29, etc. are also ranges with endpoints subsumed within the range 1-60 depending on the starting materials used, temperature, specific applications, specific embodiments, or limitations of the claims if needed. The Examples and methods disclosed herein demonstrate the recited ranges subsume every point within the ranges because different synthetic products result from changing one or more reaction parameters. Further, the methods and Examples disclosed herein describe various aspects of the disclosed ranges and the effects if the ranges are changed individually or in combination with other recited ranges.

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. Nothing disclosed herein is intended to be dedicated to the public regardless of whether such disclosure is explicitly recited in the claims.

As used herein, the term "about" and "approximately" are defined to being close to as understood by one of ordinary skill in the art. In one non-limiting embodiment, the term "about" and "approximately" are defined to be within 10%, preferably within 5%, more preferably within 1%, and most preferably within 0.5%.

Further aspects of the invention will now be described with reference to the following clauses:
Clause 1. A selective electrode membrane, comprising:
   at least one matrix material, and
   at least about 10% w/w silica.
Clause 2. The selective electrode membrane according to clause 1, wherein the silica comprises surface-treated fumed silica having a nominal BET surface area of base silica of at least about 130 m²/g.
Clause 3. The selective electrode membrane according to clause 1 or clause 2, wherein the silica comprises fumed silica that has been surface treated with one or more treating agents selected from the group consisting of trimethylchlorosilane, hexamethyldisilazane, polydimethylsiloxane, and combinations thereof.
Clause 4. The selective electrode membrane according to any preceding clause, wherein the selective electrode membrane is a chloride selective electrode membrane.
Clause 5. The selective electrode membrane according to any preceding clause, comprising between about 10 and 25% w/w of the silica.
Clause 6. A selective electrode comprising a substrate having the selective electrode membrane according to any preceding clause on a surface thereof.
Clause 7. The selective electrode according to clause 6, wherein the selective electrode membrane comprises between about 10 and 25% w/w of the silica.
Clause 8. The selective electrode according to clause 6 or clause 7 or the selective electrode membrane according to any of clauses 1 to 5, wherein the at least one matrix material comprises a polymeric matrix material.
Clause 9. A sensing assembly comprising:
   a compensation selective electrode comprising a substrate and the selective electrode membrane according to any of clauses 1 to 5 on a surface thereof, wherein the compensation selective electrode is sensitive to an analyte, and
   a reference electrode, wherein the reference electrode is sensitive to the analyte, wherein the compensation selective electrode has a first sensitivity to the analyte, and the reference electrode has a second sensitivity to the analyte, the second sensitivity being different from the first sensitivity.
Clause 10. The sensing assembly according to clause 9, wherein the silica comprises surface-treated fumed silica having a nominal BET surface area of base silica of at least about 130 m²/g.
Clause 11. The sensing assembly according to clause 9 or clause 10, wherein the silica comprises fumed silica that has been surface treated with one or more treating agents selected from the group consisting of trimethylchlorosilane, hexamethyldisilazane, polydimethylsiloxane, and combinations thereof.
Clause 12. The sensing assembly according to any of clauses 9 to 11, wherein the selective electrode membrane is a chloride selective electrode membrane.
Clause 13. The sensing assembly according to any of clauses 9 to 12, wherein the selective electrode membrane comprises between about 10 and 25% w/w of the silica.
Clause 14. The sensing assembly according to any of clauses 9 to 13, wherein the sensing assembly comprises a primary fluid channel, and wherein the compensation selective electrode and the reference electrode are contained in the primary fluid channel.
Clause 15. A method of making a selective electrode membrane, comprising:
   combining at least one matrix material, a silica, and a solvent to provide a solution,
   providing the solution on a surface, and
   drying the solution to provide the selective electrode membrane,
   wherein the selective electrode membrane comprises at least about 10% w/w of the silica.
Clause 16. The method according to clause 15, wherein the surface comprises a contact electrode.
Clause 17. The method according to clause 15 or clause 16, wherein the silica comprises surface treated fumed silica nanoparticles.
Clause 18. The method according to any of clauses 15 to 17, wherein the selective electrode membrane is a chloride selective electrode membrane.
Clause 19. The method according to any of clauses 15 to 18, wherein the selective electrode membrane comprises between about 10 and 25% w/w of the silica.
Clause 20. The method according to any of clauses 15 to 19, wherein the at least one matrix material comprises a polymeric matrix material.

## Claims

1. A selective electrode membrane, comprising:
at least one matrix material, and
at least about 10% w/w silica.

2. The selective electrode membrane according to claim 1, wherein the silica comprises surface-treated fumed silica having a nominal BET surface area of base silica of at least about 130 m²/g.

3. The selective electrode membrane according to claim 1 or claim 2, wherein the silica comprises fumed silica that has been surface treated with one or more treating agents selected from the group consisting of trimethylchlorosilane, hexamethyldisilazane, polydimethylsiloxane, and combinations thereof.

4. The selective electrode membrane according to any preceding claim, wherein the selective electrode membrane is a chloride selective electrode membrane.

5. The selective electrode membrane according to any preceding claim, comprising between about 10 and 25% w/w of the silica.

6. A selective electrode comprising a substrate having the selective electrode membrane according to any preceding claim on a surface thereof.

7. The selective electrode according to claim 6, wherein the at least one matrix material comprises a polymeric matrix material.

8. A sensing assembly comprising:
a compensation selective electrode comprising a substrate and the selective electrode membrane according to any of claims 1 to 5 on a surface thereof, wherein the compensation selective electrode is sensitive to an analyte, and
a reference electrode, wherein the reference electrode is sensitive to the analyte, wherein the compensation selective electrode has a first sensitivity to the analyte, and the reference electrode has a second sensitivity to the analyte, the second sensitivity being different from the first sensitivity.

9. The sensing assembly according to claim 8,
wherein the silica comprises surface-treated fumed silica having a nominal BET surface area of base silica of at least about 130 m²/g;
wherein the silica comprises fumed silica that has been surface treated with one or more treating agents selected from the group consisting of trimethylchlorosilane, hexamethyldisilazane, polydimethylsiloxane, and combinations thereof;
wherein the selective electrode membrane comprises between about 10 and 25% w/w of the silica; and/or
wherein the selective electrode membrane is a chloride selective electrode membrane.

10. The sensing assembly according to claim 8 or claim 9, wherein the sensing assembly comprises a primary fluid channel, and wherein the compensation selective electrode and the reference electrode are contained in the primary fluid channel.

11. A method of making a selective electrode membrane, comprising:
combining at least one matrix material, a silica, and a solvent to provide a solution,
providing the solution on a surface, and
drying the solution to provide the selective electrode membrane,
wherein the selective electrode membrane comprises at least about 10% w/w of the silica.

12. The method according to claim 11, wherein the surface comprises a contact electrode.

13. The method according to claim 11, wherein the silica comprises surface treated fumed silica nanoparticles.

14. The method according to claim 11, wherein the selective electrode membrane is a chloride selective electrode membrane; and/or
wherein the at least one matrix material comprises a polymeric matrix material.

15. The method according to claim 11, wherein the selective electrode membrane comprises between about 10 and 25% w/w of the silica.
